Europäisches Patentamt

European Patent Office

Office européen des brevets

(11) Veröffentlichungsnummer : **0 042 371 B1**

(12) **EUROPÄISCHE PATENTSCHRIFT**

(45) Veröffentlichungstag der Patentschrift :
30.01.85

(51) Int. Cl.⁴ : **G 01 L 23/24, G 01 L 9/00**

(21) Anmeldenummer : **81890095.3**

(22) Anmeldetag : **09.06.81**

(54) Messwertaufnehmer zur Messung von Verformungen an Hohlkörpern.

(30) Priorität : **16.06.80 AT 3178/80**

(43) Veröffentlichungstag der Anmeldung :
**23.12.81 Patentblatt 81/51**

(45) Bekanntmachung des Hinweises auf die Patenterteilung : **30.01.85 Patentblatt 85/05**

(84) Benannte Vertragsstaaten :
**CH DE FR GB IT LI**

(56) Entgegenhaltungen :
**DE-A- 2 529 563**
**DE-A- 2 647 402**
**DE-A- 2 747 949**
**FR-A- 2 408 824**
**FR-A- 2 459 464**
**US-A- 4 065 969**

(73) Patentinhaber : **List, Hans**
**Heinrichstrasse 126**
**A-8010 Graz (AT)**

(72) Erfinder : **Krempl, Peter**
**Leonhardstrasse 100/2/7**
**A-8010 Graz (AT)**
Erfinder : **Zeiringer, Rudolf**
**Hilmgasse 15**
**Graz (AT)**
Erfinder : **Claassen, Peter**
**Ragnitzstrasse 173**
**A-8047 Graz (AT)**

(74) Vertreter : **Krause, Walter, Dr. Dipl.-Ing.**
**Margaretenstrasse 21**
**A-1040 Wien (AT)**

Jouve, 18, rue St-Denis, 75001 Paris, France

## Beschreibung

Die Erfindung betrifft einen Meßwertaufnehmer zur Messung von Verformungen an Hohlkörpern, insbesondere des Innendruckes in Rohren durch Erfassung von Rohrdeformationen, mit einem vorzugsweise zweigeteilten Gehäuse, welches den Hohlkörper umschließend lösbar auf diesem befestigbar ist und zumindest ein flexibles Meßelement je Gehäuseteil enthält, welches im auf den Hohlkörper aufgesetzten Zustand des Meßwertaufnehmers von jeweils einem Stützelement elastisch zumindest indirekt an die Oberfläche des Hohlkörpers angedrückt ist und mit den für die Aufnahme der Meßsignale erforderlichen Anschlüssen verbunden ist.

Derartige, z. B. aus der AT-B 353.507 bekannte Meßwertaufnehmer arbeiten nach dem Prinzip der reibungsschlüssigen Übertragung von Dehnungen der Oberfläche des zu vermessenden Hohlkörpers auf das Meßelement, welches mit einem elastischen Stützelement im wesentlichen senkrecht zur Oberfläche des zu vermessenden Hohlkörpers angepreßt wird. Durch den dadurch notwendigen mehrschichtigen Aufbau sind die bekannten Meßwertaufnehmer in ihrer Herstellung bzw. der Montage und der Justierung der einzelnen Schichten zueinander relativ aufwendig. Besonders die richtige Positionierung der Meßelemente in Gehäuse ist schwierig. Die exakte Anordnung der Meßelemente im Gehäuse ist aber besonders wichtig, da z. B. zur Erreichung einer guten Beschleunigungskompensation bzw. einer guten Kompensation der bei den Rohrschwingungen durch die Rohrverbiegung sich ergebenden Oberflächenveränderungen der Leitung auftretenden Störsignale, ein exaktes Gegenüberliegen von jeweils zwei in ihrer Wirkung gleichartigen Meßelementen erforderlich ist. Weiters kann auch die Verbindung zwischen Meßelement und Stützelement wegen der unterschiedlichen Materialien zu Schwierigkeiten führen. Die für die Aufnahme der Meßsignale erforderlichen Anschlüsse am Meßelement müssen zur Herausleitung der Meßsignale aus dem Meßwertaufnehmer das elastische Stützelement, das beim Aufklemmen des Meßwertaufnehmers ziemlich stark deformiert wird, überbrücken, was erhöhte Anforderungen an die konstruktive Gestaltung des Meßwertaufnehmers insgesamt stellt und damit auch dessen Herstellungs- und Montagekosten erhöht.

Aufgabe der vorliegenden Erfindung ist es, Meßwertaufnehmer der eingangs genannten Art so auszubilden, daß die erwähnten Nachteile der bekannten Ausführungen vermieden werden und daß insbesondere eine Vereinfachung in der Herstellung bzw. der Montage und der Justierung des Meßwertaufnehmers erreichbar ist.

Dies wird gemäß der vorliegenden Erfindung dadurch erreicht, daß jedes Stützelement zumindest mit einem der das jeweils zugehörige Meßelement sowie den zugehörigen Gehäuseteil umfassenden Elemente einstückig ausgebildet ist. Durch diese Einstückigkeit von zumindest jeweils zwei der für das Funktionieren des Meßwertaufnehmers notwendigen Elemente — Gehäuse, elastisches Stützelement, Meßelement — ist eine bedeutende Vereinfachung hinsichtlich Aufbau und Montage bzw. Justierung des Meßwertaufnehmers bzw. der einzelnen Teile des Meßwertaufnehmers gewährleistet.

Das Meßelement kann aus einem elastischen, zumindest lokal meßempfindlichen Material bestehen und einstückig mit dem elastischen Stützelement sein. Die Anordnung dieses kombinierten Elementes im Gehäuse ist bereits wesentlich einfacher und auch die Anordnung der für die Aufnahme der Meßsignale erforderlichen Anschlüsse im Gehäuse bzw. deren Herausleitung aus dem Gehäuse ist wesentlich vereinfacht.

In diesem Zusammenhang ist es besonders vorteilhaft, daß das Meßelement samt elastischem Stützelement einstükig mit dem Gehäuse ist. Dies ist besonders interessant im Zusammenhang mit der Verwendung eines piezoelektrischen bzw. piezoresistiven Materials als Meßelement. Bei der Verwendung von derartigen Materialien ist es z. B. möglich, daß als Meßelement direkt ein piezoelektrischer, elastischer Gummi bzw. Kunststoff Verwendung findet, was unmittelbar eine Einstückigkeit von Stützelement und Meßelement ermöglicht. Die bei der Verwendung eines derartigen, piezoelektrisch bzw. piezoresistiv gemachten Materials erforderlichen Anschlüsse für die Ableitung der elektrischen Meßsignale an den gegenüberliegenden Oberflächen des Elementes können auf einfache Weise einerseits direkt starr mit dem Gehäuse verbunden und andererseits — an der dem zu vermessenden Hohlkörper anliegenden Seite — entweder direkt über die Oberfläche des Hohlkörpers oder über eine entsprechende Kontaktschicht abgeleitet werden. Bei der vollkommen einstückigen Ausführung von Gehäuse, Stützelement und Meßelement ist es möglich, die zur Meßempfindlichmachung des an die Oberfläche des zu vermessenden Hohlkörpers anliegenden Teiles des Meßwertaufnehmers durch elektrische Polarisierung erforderliche Elektrode in Form eines Gitters od. dgl. bei der Herstellung des gesamten Meßwertaufnehmers im Spritzgußverfahren gleich miteinzuformen. Durch den Zusatz von sogenannten Weichmachern in dem den Meßelement samt Stützelement entsprechenden Bereich des einstückigen und ansonsten hartgespritzten Meßwertaufnehmers wird die für die reibschlüssige Meßwertübertragung notwendige elastische Anpressung des eigentlichen Meßelementes an die Oberfläche des zu vermessenden Hohlkörpers erreicht. Es ist aber auch möglich, durch Verarbeitung eines an sich weichen bzw. elastischen Kunststoff- oder Gummimaterials und durch Zusatz von sogenannten Härtern im Außenbereich bzw. in dem für die Klemmung des Meßwertaufnehmers auf den zu vermessenden Hohlkörper verantwortlichen Bereich, die gleiche Wirkung zu erzielen. Das für die Zwecke der anschließenden Polarisierung bzw. zur Herstellung der piezoelektrischen bzw. -resistiven Eigenschaften des Meßelementes beispielsweise gleich miteingeformte Gitter od. dgl. kann beim fertigen Meßwertaufnehmer auch direkt zur Ableitung des einen Poles des Meßelementes verwendet werden.

In Weiterbildung der Erfindung ist vorgesehen, daß je Gehäuseteil zumindest ein Bereich mit verringerter Wandstärke vorgesehen ist, welcher im aufgesetzten Zustand von der Oberfläche des Hohlkörpers deformiert ist und das zumindest lokal empfindliche Meßelement samt Stützelement bildet. Damit ist die für die Zwecke der vorliegenden Erfindung notwendige Elastizität des Stützelementes weniger über die eigentliche Elastizität des Materials in diesem Bereich als über die konstruktive Ausbildung des Meßwertaufnehmers bzw. des Gehäuses des Meßwertaufnehmers gegeben, was zusammen mit der freieren Wahl der Ausbildung der Ableitung der Meßsignale insgesamt größere Freiheiten in der Gestaltung des Meßwertaufnehmers zuläßt.

Zwischen Stützelement und Gehäuseteil bzw. Meßelement und Gehäuseteil ist nach einem anderen Vorschlag der Erfindung ein hermetisch dichter Raum vorgesehen, welcher mit einem Medium unter Druck gefüllt ist. Dies bedeutet praktisch die Anordnung eines zusätzlichen elastischen Stützelementes bzw. unter Umständen ist es sogar möglich, durch die Anordnung dieses unter Druck stehenden Raumes auf ein Stützelement im eigentlichen Sinn zu verzichten.

Um die Größe der zusätzlichen Anpreßkraft des Meßelementes entsprechend variieren zu können kann in Weiterbildung der Erfindung auch vorgesehen sein, daß der hermetisch dichte Raum im Gehäuseteil von außen her unter Druck setzbar ist.

Die Erfindung wird im folgenden anhand der in der Zeichnung dargestellten Ausführungsbeispiele näher erläutert.

Figur 1 zeigt einen erfindungsgemäßen Meßwertaufnehmer in schematischer Darstellung,

Figur 2 einen Schnitt entlang der Linie II-II in Fig 1,

Figur 3 eine Ausführungsvariante in einer der Fig. 1 entsprechenden Darstellung,

Figur 4 einen Schnitt entlang der Linie IV-IV in Fig. 3,

Figur 5 die schematische Darstellung eines Schnittes entsprechend der Fig. 1 durch ein weiteres Ausführungsbeispiel gemäß der Erfindung,

Figur 6 einen Schnitt entlang der Linie VI-VI in Fig. 5,

Figur 7 in der oberen und unteren Hälfte jeweils einen schematischen Schnitt durch ein weiteres Ausführungsbeispiel gemäß der vorliegenden Erfindung und

Figur 8 einen Schnitt entlang der Linie VIII-VIII in Fig. 7.

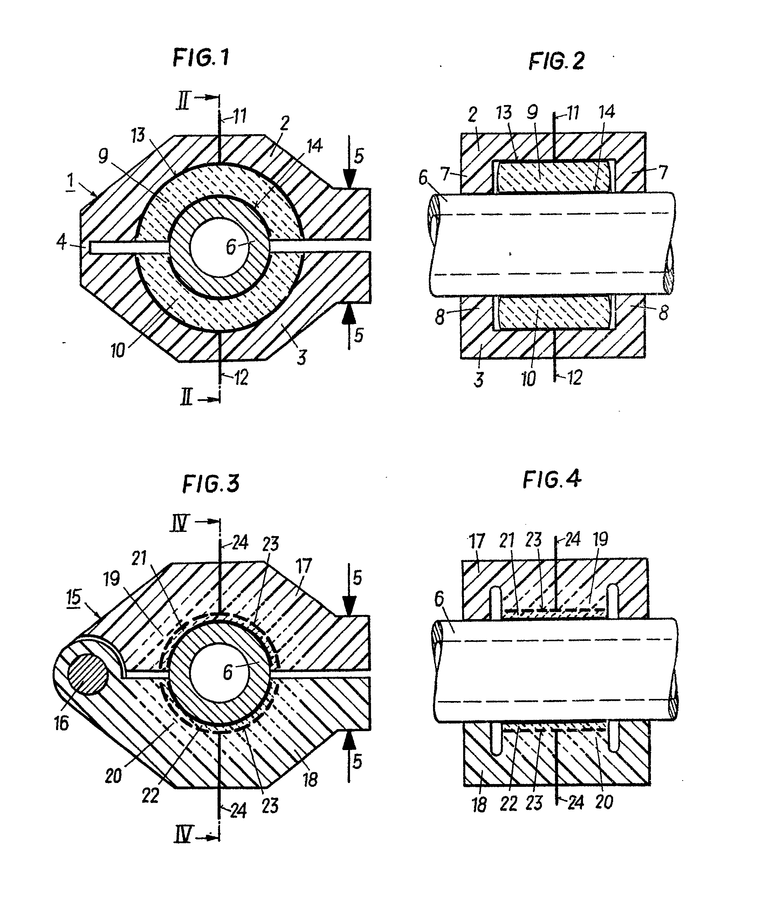

Das Gehäuse 1 des in den Fig. 1 und 2 dargestellten Meßwertaufnehmers besteht aus Kunststoff, weist zwei Gehäusehälften 2, 3, welche über ein Kunststoffscharnier 4 verbunden sind, auf und ist insgesamt einstückig, z. B. im Spritzguß, hergestellt. Der Meßwertaufnehmer ist über eine durch die Pfeile 5 angedeutete Spannvorrichtung auf ein Rohr 6 aufgespannt, wobei — wie in Fig. 2 ersichtlich — die seitlichen Gehäuseteile 7 und 8 das Rohr 6 fest umspannen, so daß allfällige Bewegungen des Rohres 6 vom Gehäuse 1 des Meßwertaufnehmers verzögerungsfrei mitgemacht werden.

Im Inneren jeder der beiden Gehäusehälften 2, 3 ist je ein Meßelement 9, 10 angebracht, welches aus einem piezoelektrischen bzw. -resistiven, elastischen Material besteht und im aufgespannten Zustand des Meßwertaufnehmers gegen die Oberfläche des Rohres 6 angedrückt wird. Auf diese Weise werden bei Druckänderungen im Inneren des Rohres 6 auftretende Deformationen an dessen Oberfläche reibschlüssig auf die Meßelemente 9, 10 übertragen. Diese erlauben ihrerseits aufgrund ihrer Piezoempfindlichkeit eine Umwandlung von auf sie einwirkenden Deformationskräften in entsprechende, den verursachenden Deformationen proportionale elektrische Signale, welche über die nur schematisch angedeuteten Ableitungen 11, 12 einer hier nicht dargestellten Auswerteeinrichtung zugeführt werden. Bei dem dargestellten, nach dem piezoelektrischen Prinzip arbeitenden Meßwertaufnehmer ist der äußere Pol der Meßelemente 9, 10 über eine z. B. aufgedampfte elektrisch leitende Kontaktschicht 13 mit der jeweiligen Ableitung 11, 12 und der innere Pol der Meßelemente 9, 10 entweder über eine weitere Kontaktschicht 14 mit einer nicht dargestellten weiteren Ableitung oder — im Falle einer elektrisch leitenden Oberfläche des Rohres 6 — direkt mit dem Rohr 6 verbunden.

Durch die mit dieser Ausführung erreichte Einstückigkeit des Meßelements mit dem für dessen reibschlüssige Anpressung an die zu vermessende Oberfläche erforderlichen elastischen Stützelement ist eine wesentliche Vereinfachung der Herstellung bzw. Montage und Justierung des Meßwertaufnehmers erreicht, da es z. B. für die Kompensation von aufgrund von Biegeschwingungen des Rohres 6 bzw. Schwingungsbeschleunigungen desselben auftretenden Störsignalen erforderlich ist, daß die beiden gleichwertigen Meßelemente 9, 10 sich möglichst exakt im Gehäuse 1 gegenüberliegen, was durch die Zusammenfassung von Meßelement und Stützelement lediglich einer einzigen Justierung bedarf. Bei einem direkt über das Rohr 6 herausgeführten inneren Pol der Ableitung der Meßelemente ist zusätzlich noch die Ableitung der Meßsignale sehr wesentlich vereinfacht, da die Ableitung des äußeren Poles fest mit dem Gehäuse verbunden sein kann und keine Rücksicht auf die elastische Deformation des Stützelementes genommen zu werden braucht.

Der in den Fig. 3 und 4 dargestellte Meßwertaufnehmer hat ein Gehäuse 15, welches aus zwei über einen Bolzen 16 gelenkig verbundenen Teilen 17, 18 besteht und mittels einer wiederum durch Pfeile 5 angedeuteten Spannvorrichtung an der dem Bolzen 16 gegenüberliegenden Seite auf ein Rohr 6 fest aufspannbar ist.

Die Gehäuseteile 17, 18 sind in diesem Ausführungsbeispiel einstückig sowohl mit den elastischen Stützelementen 19, 20 als auch mit den Meßelementen 21, 22 ausgebildet. Dazu ist es z. B. möglich, beim Spritzen der Gehäuseteile 17, 18 im Kunststoff-Spritzguß das eingespritzte Material im inneren Bereich der beiden Gehäuseteile 17 und 18, der etwa dem kombinierten Spann- bzw. Meßelement der Ausführungsform nach den Fig. 1 und 2 entspricht, durch Zusatz eines sogenannten « Weichmachers » zu einem ansonsten hart aushärtenden Kunststoffmaterial mit der für die reibschlüssige Übertragung der Oberflächendeformationen des Rohres erforderlichen Elastizität zu versehen. Andererseits ist es aber auch möglich, einen an sich weich bzw. elastisch aushärtenden Kunststoff im äußeren Bereich der Gehäuseteile durch Zusatz eines sogenannten « Härters » beim Spritzen die entsprechende Festigkeit zu verleihen.

Die Polarisation bzw. Meßempfindlichmachung des im ausgespannten Zustand des Meßwertaufnehmers am Rohr anliegenden innersten Teiles der Gehäuseteile 17, 18 also der eigentlichen Meßelemente 21, 22, wird durch ein miteingespritztes, elektrisch leitendes Gitter 23 ermöglicht, welches mit den entsprechenden, hier nur schematisch angedeuteten Ableitungen 24 in Verbindung steht. Dieses Gitter 23 kann mitsamt den Ableitungen 24 nach Herstellung des Meßwertaufnehmers auch direkt zur Ableitung des äußeren Poles der Meßelemente 21, 22 verwendet werden. Der innere Pol jedes der Meßelemente kann ebenso wie zu den Fig. 1 und 2 bereits besprochen entweder direkt über das Rohr 6 oder auch durch separat angebrachte Kontaktschichten oder ähnliches abgeleitet werden. Diese Ausführungsform zeichnet sich vor allen Dingen dadurch aus, daß jegliche Montage- bzw. Justierarbeit für die Meß- und Stützelemente wegfällt, was nicht nur die Herstellung vereinfacht, sondern auch ein einwandfreies Funktionieren des Meßwertaufnehmers sicherstellt.

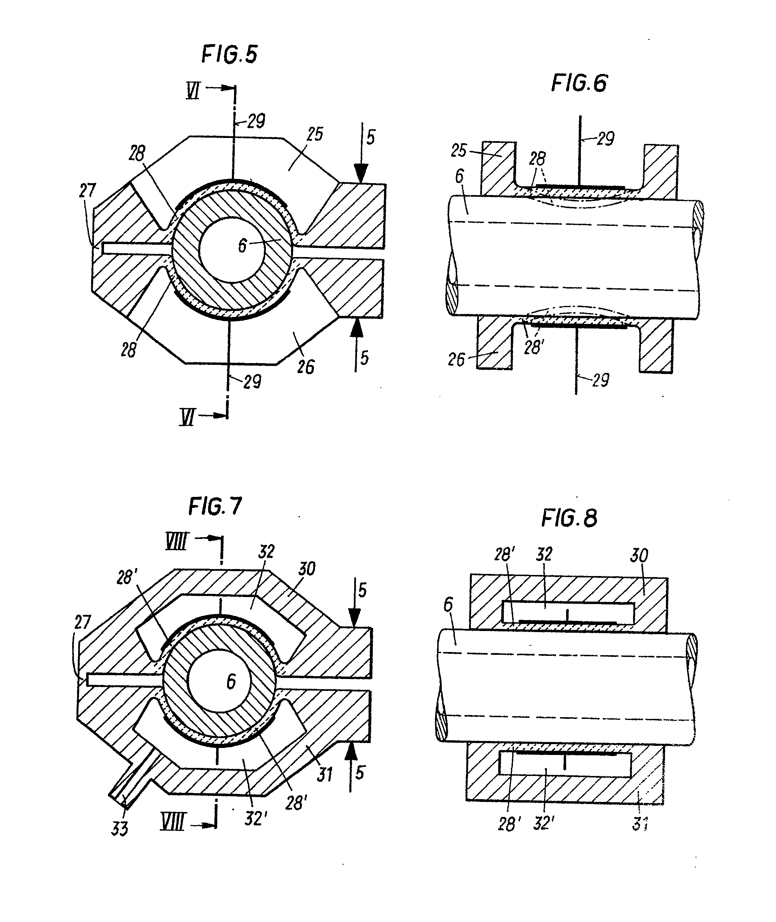

Beim Meßwertaufnehmer nach den Fig. 5 und 6, welcher wiederum zwei über einen Bereich mit verringerter Wandstärke unmittelbar verbundene Gehäusehälften 25, 26 aufweist, ist je Gehäusehälfte 25, 26 ein Bereich 28 mit ebenfalls verringerter Wandstärke vorgesehen, welcher im auf das Rohr 6 aufgesetzten Zustand des Meßwertaufnehmers von der Oberfläche des Rohres deformiert ist und das zumindest lokal empfindliche Meßelement samt Stützelement bildet. In Fig. 6 ist strichliert die Lage dieses Meß- und Stützelement gleichzeitig darstellenden Bereiches 28 bei nicht vorhandenem Rohr 6 eingezeichnet. Die für die Zwecke der vorliegenden Erfindung notwendige Elastizität des das Meßelement an die Oberfläche des zu vermessenden Hohlkörpers andrückenden Stützelementes ist hier also weniger über die eigentliche Elastizität des Materials in diesem Bereich als über die konstruktive Ausbildung des Meßwertaufnehmers bzw. der Gehäuseteile 25, 26 gegeben, was unter Umständen eine größere Auswahl in Bezug auf das zu verwendende Material zuläßt.

Die Ableitung 29 der Meßsignale ist hier lediglich schematisch dargestellt und könnte auch auf irgend eine andere der bereits zu den vorher besprochenen Ausführungsformen beschriebene Art und Weise erfolgen.

Die Ausführungsform nach den Fig. 7 und 8 entspricht von der Anordnung bzw. Gestaltung des gemeinsam mit dem Meßelement als Bereich 28' mit verringerter Wandstärke ausgeführten Stützelementes der Ausführung nach den Fig. 5 und 6. Die beiden Gehäuseteile 30 und 31 sind auch hier wiederum mittels eines als Bereich 27 mit verringerter Wandstärke einstückig angeformten Scharniers gelenkig verbunden und über eine durch die Pfeile 5 angedeutete Spannvorrichtung auf ein Rohr 6 aufspannbar. Auch hier ist die Ableitung 29 der Meßsignale lediglich schematisch dargestellt und könnte auch auf beliebige andere Weise erfolgen.

Zwischen dem Stütz- bzw. Meßelement bzw. dem die beiden Elemente darstellenden Bereich 28' und den Gehäuseteilen 30 bzw. 31 ist ein hermetisch dichter Raum 32 bzw. 32' vorgesehen, welche mit einem Medium unter Druck, wie z. B. Luft, Gas, Öl oder ähnliches, gefüllt ist. Im oberen Teil der Fig. 7 ist der Fall dargestellt, daß der hermetisch dichte Raum 32 z. B. bereits bei der Herstellung des Meßwertaufnehmers mit dem Medium unter Druck gefüllt wird ; im unteren Teil der Fig. 7 ist die Möglichkeit dargestellt, mittels eines Anschlußnippels 33 für eine hier nicht gezeichnete Druckpumpe oder ähnliches den Druck im Druckraum 32' zur Anpassung der dadurch erzielten Anpreßkraft nachträglich und z. B. auch erst nach dem Aufsetzen des Meßwertaufnehmers auf das Rohr 6 ändern zu können.

**Ansprüche**

1. Meßwertaufnehmer zur Messung von Verformungen an Hohlkörpern, insbesondere des Innendruckes in Rohren durch Erfassung von Rohrdeformationen, mit einem vorzugsweise zweigeteilten Gehäuse, welches den Hohlkörper umschließend lösbar auf diesem befestigbar ist und zumindest ein flexibles Meßelement je Gehäuseteil enthält, welches im auf den Hohlkörper aufgesetzten Zustand des Meßwertaufnehmers von jeweils einem Stützelement elastisch zumindest indirekt an die Oberfläche des Hohlkörpers angedrückt ist und mit den für die Aufnahme der Meßsignale erforderlichen Anschlüssen verbunden ist, dadurch gekennzeichnet, daß jedes Stützelement zumindest mit einem der das jeweils zugehörige Meßelement sowie den zugehörigen Gehäuseteil umfassenden Elemente einstückig ausgebildet ist.

2. Meßwertaufnehmer nach Anspruch 1, dadurch gekennzeichnet, daß je Gehäuseteil zumindest ein Bereich (28, 28') mit verringerter Wandstärke vorgesehen ist, welcher im aufgesetzten Zustand von der Oberfläche des Hohlkörpers deformiert ist und das zumindest lokal empfindliche Meßelement samt Stützelement bildet.

3. Meßwertaufnehmer nach Anspruch 1 oder 2, dadurch gekennzeichnet, daß zwischen Stützelement bzw. Meßelement und Gehäuseteil ein hermetisch dichter Raum (32, 32') vorgesehen ist, welcher mit einem Medium unter Druck gefüllt ist.

4. Meßwertaufnehmer nach Anspruch 3, dadurch gekennzeichnet, daß der hermitisch dichte Raum (32') im Gehäuseteil in an sich bekannter Weise von außen her unter Druck setzbar ist.

### Claims

1. A transducer for measuring deformations of hollow bodies, and especially for measuring the interior pressure in pipes by determination of pipe deformations, comprising a, preferably, two-part housing enclosing the hollow body, which may be fastened on the latter in a detachable way and contains at least one flexible measuring element in each part of the housing, which element is pressed elastically, and at least indirectly, against the surface of the hollow body by one supporting element each when the transducer is mounted on the hollow body, and is connected to the leads necessary for picking up the measurement signals, characterized in that each supporting element is configured as a unit integral with at least one of the elements comprising the corresponding measuring element and the corresponding part of the housing.

2. A transducer according to claim 1, characterized in that each part of the housing has at least one area (28, 28') of reduced wall thickness which, when mounted, is deformed by the surface of the hollow body and forms the — at least locally — sensitive measuring element and the supporting element.

3. A transducer according to claim 1 or 2, characterized in that a hermetically sealed chamber (32, 32') is provided between supporting element or measuring element and the housing part, which chamber is filled with a pressurized medium.

4. A transducer according to claim 3, characterized in that the hermetically sealed chamber (32') in the housing part may be pressurized from outside in a manner known *per se*.

### Revendications

1. Détecteur destiné à la mesure de déformations sur des corps creux, notamment de la pression interne régnant dans des tubes par détection de déformations de tubes, comportant un boîtier, de préférence divisé en deux parties, qui entoure le corps creux en pouvant se fixer sur celui-ci de façon amovible et contient au moins un élément de mesure flexible pour chaque partie de boîtier, élément de mesure qui, lorsque le détecteur destiné à la mesure est placé sur le corps creux, est pressé élastiquement par, chaque fois, un élément d'appui, au moins indirectement, contre la surface extérieure du corps creux et qui est relié aux raccords nécessaires pour la réception des signaux de mesure, détecteur caractérisé en ce que chaque élément d'appui est constitué d'une seule pièce au moins avec l'un des éléments comprenant l'élément de mesure chaque fois correspondant ainsi que la partie de boîtier correspondante.

2. Détecteur de mesure selon la revendication 1, caractérisé en ce que, pour chaque partie de boîtier est prévue au moins une zone (28, 28') à épaisseur de paroi réduite qui, en position de mise en place, est déformée par la surface extérieure du corps creux et forme l'élément de mesure, sensible au moins localement avec l'élément d'appui.

3. Détecteur de mesure selon la revendication 1 ou 2, caractérisé en ce que, entre l'élément d'appui ou l'élément de mesure et la partie de boîtier est prévue une chambre (32, 32') hermétiquement étanche, qui est remplie d'un milieu sous pression.

4. Détecteur de mesure selon la revendication 3, caractérisé en ce que la chambre (32') hermétiquement étanche prévue dans la partie de boîtier, peut être mise sous pression, de manière connue en soi, depuis l'extérieur.

## FIG.1

## FIG.2

## FIG.3

## FIG.4

FIG.5

FIG.6

FIG.7

FIG.8